# EUROPÄISCHE PATENTSCHRIFT

(11) **EP 2 477 849 B1**
(45) Veröffentlichungstag und Bekanntmachung des Hinweises auf die Patenterteilung: **11.06.2014**
(21) Anmeldenummer: 11724996.1
(22) Anmeldetag: 18.05.2011
(51) Int. Cl.: B60R 21/215, B60R 21/203

(54) **GASSACKANORDNUNG FÜR EIN FAHRZEUGINSASSEN-RÜCKHALTESYSTEM**
AIRBAG DEVICE FOR A VEHICLE OCCUPANT RESTRAINT SYSTEM
DISPOSITIF D'AIRBAG POUR UN SYSTÈME DE RETENUE D'UN OCCUPANT DE VÉHICULE AUTOMOBILE

(30) Priorität: 18.05.2010 DE 102010029087
(43) Veröffentlichungstag der Anmeldung: 25.07.2012
(73) Patentinhaber: Takata AG, 63743 Aschaffenburg (DE)
(72) Erfinder: WEIGAND, Steffen, 63739 Aschaffenburg (DE)
(74) Vertreter: Staroske, Sandro
(86) Internationale Anmeldenummer: PCT/EP2011/058021
(87) Internationale Veröffentlichungsnummer: WO 2011/144648

(56) Entgegenhaltungen:
- EP-A2- 0 887 239
- EP-A2- 0 895 904
- DE-A1- 4 414 743
- US-A- 6 079 737

## Beschreibung

Die Erfindung betrifft eine Gassackanordnung für ein Fahrzeuginsassen-Rückhaltesystem gemäß Anspruch 1.

Aus dem Stand der Technik sind Gassackanordnungen mit einem aufblasbaren Gassack so wie einem an einem Gasgeneratorträger angeordneten Gasgenerator zum Aufblasen des Gassacks bekannt. Der Gassack wird zumindest auf einer zum Fahrzeuginnenraum weisenden Seite mittels eines Gehäuseteils (insbesondere in Form einer Gassackkappe) abgedeckt, wobei die Gassackkappe mit dem Gasgeneratorträger verbunden ist.

Eine gattungsgemäße Gassackanordnung für ein Fahrzeuginsassen-Rückhaltesystem ist aus dem Dokument DE 44 14 743 A1 bekannt.

Das von der Erfindung zu lösende Problem besteht darin, eine Gassackanordnung bereitzustellen, mit der sich eine möglichst stabile Verbindung zwischen Gehäuseteil und Gasgeneratorträger herstellen lässt und die dennoch möglichst wenig Bauraum benötigt.

Dieses Problem wird durch die Gassackanordnung mit den Merkmalen des Anspruchs 1 gelöst. Weiterbildungen der Erfindung sind den abhängigen Ansprüchen angegeben.

Danach wird eine Gassackanordnung für ein Fahrzeuginsassen-Rückhaltesystem bereitgestellt, mit
- einem zum Schutz eines Fahrzeuginsassen aufblasbaren Gassack;
- einem Gasgenerator zum Aufblasen des Gassacks;
- einem Gasgeneratorträger, an dem der Gasgenerator angeordnet ist;
- einem Gehäuseteil, das den Gassack bezogen auf den im Fahrzeug montierten Zustand der Gassackanordnung zum Fahrzeuginnenraum hin abdeckt,
   wobei
- das Gehäuseteil mindestens ein Rastelement und der Gasgeneratorträger mindestens eine dem Rastelement zugeordnete Rastöffnung aufweisen,
- das Gehäuseteil dadurch mit dem Gasgeneratorträger verbunden werden kann, dass das Rastelement entlang einer im Wesentlichen senkrecht zu dem Gasgeneratorträger orientierten Einführrichtung in die Rastöffnung bis zum Erreichen einer Rastposition eingeführt wird, in der es ein an die Rastöffnung angrenzendes und mit dem Gasgeneratorträger verbundenes Sperrelement hintergreift, so dass einem Herausziehen des Rastelementes aus der Rastöffnung entgegengewirkt wird,
- das Sperrelement so ausgebildet ist, dass es zumindest abschnittsweise in einer Richtung, die schräg oder quer zur Einführrichtung verläuft, gegen das Rastelement drückt, wenn auf das in Rastposition befindliche Rastelement eine Zugkraft entgegen der Einführrichtung ausgeübt wird,
- das Sperrelement einen ersten und einen zweiten Teilabschnitt aufweist, wobei der erste Teilabschnitt mit dem Gasgeneratorträger und über eine Krümmung mit dem zweiten Teilabschnitt verbunden ist, so dass das Sperrelement im Querschnitt zumindest näherungsweise U- oder V-förmig ausgebildet ist, und
- sich die Krümmung auf der dem Gehäuseteil zuzuwendenden Seite des Gasgeneratorträgers befindet.

Das Sperrelement ist also insbesondere so ausgebildet, dass es bei einem Versuch, das verrastete Gehäuseteil von dem Gasgeneratorträger zu entfernen, gegen das Rastelement drückt, so dass das Sperrelement durch das Rastelement blockiert und z.B. ein Verformen (z.B. Abbiegen) des Sperrelementes verhindert wird. Insbesondere wird die Zugkraft, die bei dem Versuch, das Gehäuseteil zu entfernen, auf das Rastelement ausgeübt wird, über das Sperrelement zumindest teilweise so in Richtung auf das Rastelement umgelenkt, dass sie zumindest teilweise von dem Rastelement selber gehalten wird. Mit anderen Worten wird eine selbsthemmende Verrastung des Gehäuseteils an dem Gasgeneratorträger realisiert.

Das Sperrelement ist gleichzeitig so flexibel ausgebildet, dass es beim Einführen des Rastelementes in die Rastöffnung zumindest abschnittsweise zur Seite gedrückt wird, so dass sich der Querschnitt der Rastöffnung vergrößert und insbesondere ein Rastabschnitt des Rastelementes, dessen Abmessungen größer sind als die Abmessungen der Rastöffnung im Ausgangszustand, durch die Rastöffnung hindurchgeführt werden kann. Nach Hindurchführen des breiteren Rastabschnitts des Rastelementes kehrt das Sperrelement in seine ursprüngliche Lage zurück, so dass der Rastabschnitt des Rastelementes das Sperrelement hintergreift.

Der Gasgeneratorträger ist insbesondere so ausgebildet, dass er sich entlang einer Haupterstreckungsebene erstreckt, d.h. er besitzt entlang einer Ebene seine größte Ausdehnung. Es ist natürlich denkbar, dass der Gasgeneratorträger Strukturen aufweist, die sich von der Haupterstreckungsebene weg erstrecken, d.h. der Gasgeneratorträger kann selbstverständlich auch eine gewisse Ausdehnung senkrecht zu seiner Haupterstreckungsebene aufweisen. Beispielsweise weist der Gasgeneratorträger eine entlang seines äußeren Umfanges verlaufende Wandung auf.

Die Rastöffnung (bzw. die mehreren Rastöffnungen) ist jedoch in einem Beispiel der Erfindung nicht in einem senkrecht zu der Haupterstreckungsebene orientierten Wandungsbereich, sondern in einem parallel zur Haupterstreckungsebene verlaufenden Bereich des Gasgeneratorträgers angeordnet, so dass die Einführrichtung, entlang derer das Rastelement (bzw. die mehreren Rastelemente) des Gehäuseteils in die Rastöffnung einzuführen ist, zumindest näherungsweise senkrecht zu der Haupterstreckungsebene des Gasgeneratorträgers verläuft. Die Möglichkeit, die Verrastung nicht in einer Wandung des Gasgeneratorträgers, sondern in einem parallel zur Haupterstreckungsebene orientierten Bereich, ermöglicht z.B. einen vergleichsweise geringen Bauraumbedarf für die Elemente (Rastlemente, Sperrelement, Rastöffnung) der Rastverbindung.

Insbesondere können, falls mehrere Rastöffnungen vorgesehen werden, diese in einer gemeinsamen Ebene angeordnet sein.

Es ist natürlich auch denkbar, dass die Rastöffnung (oder zumindest einige Rastöffnungen) in einer schräg oder senkrecht zur Haupterstreckungsebene des Gasgenerators orientierten Struktur (z.B. ein von einem Bodenbereich abstehender Steg des Gasgeneratorträgers oder eine Wandung) angeordnet sind, so dass die Einführrichtung schräg oder parallel zu Haupterstreckungsebene des Gasgeneratorträgers weist.

Des Weiteren kann der Gasgeneratorträger Strukturen, zum Beispiel eine Öffnung, aufweisen, die zum Anordnen des Gasgenerators an dem Gasgeneratorträger dienen. Beispielsweise weist der Gasgeneratorträger eine längliche Ausbuchtung auf, in der ein Rohrgasgenerator angeordnet werden kann. Es ist jedoch auch denkbar, dass der Gasgenerator zum Aufnehmen eines Topfgasgenerators ausgebildet ist und hierfür zum Beispiel eine insbesondere kreisförmige (zum Beispiel zentrale) Öffnung besitzt.

Die erfindungsgemäße Gassackanordnung kann insbesondere in einem Fahrergassackmodul verwendet werden. Entsprechend betrifft die Erfindung auch ein Fahrergassackmodul mit der oben beschriebenen Gassackanordnung.

Das Gehäuseteil ist insbesondere in Form einer Gassackkappe ausgebildet, die den Gassack mit einer kuppelartigen (hohlhalbkugelartigen) Wölbung überdeckt, wobei die Wölbung von dem Gasgeneratorträger wegweist und eine Stirnseite der Gassackkappe dem Gasgeneratorträger zugewandt ist oder an ihm anliegt, wenn die Gassackkappe mit dem Gasgeneratorträger verrastet ist.

Falls mehrere Rastöffnungen in dem Gasgeneratorträger vorhanden sind, sind diese zum Beispiel entlang eines äußeren Umfanges des Gasgeneratorträgers angeordnet, wobei z.B. zumindest einige der Rastöffnungen einen konstanten Abschnitt zueinander aufweisen. Entsprechend sind auch mehrere Rastelemente an dem Gehäuseteil vorgesehen. Die Rastöffnungen weisen z.B. einen rechteckigen Querschnitt auf, wobei sie insbesondere so orientiert sind, dass die Längsseiten in Umfangsrichtung des Gasgeneratorträgers ausgerichtet sind.

Die Rastöffnung wird insbesondere durch einen Rand, den der Gasgeneratorträger ausbildet, sowie durch das Sperrelement begrenzt. Insbesondere begrenzt eine schräg zum Gasgeneratorträger (d. h. zu dessen Haupterstreckungsebene) verlaufende Oberfläche des Sperrelementes die Rastöffnung.

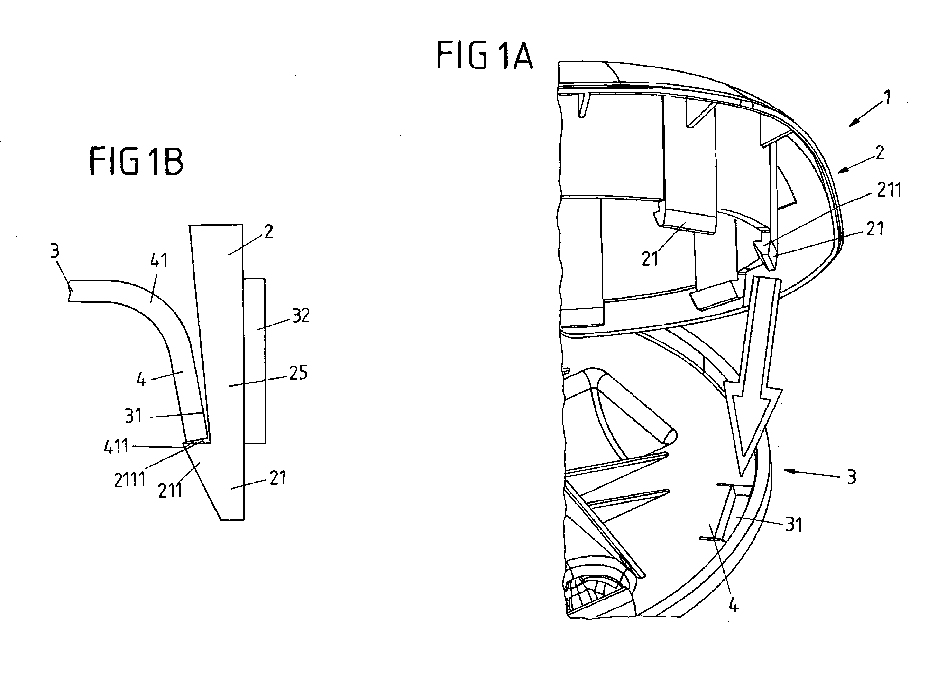

In einer nicht erfindungsgemäßen Ausgestaltung der Erfindung kann das Sperrelement zum Beispiel zumindest abschnittsweise unter einem Winkel zu dem Gasgeneratorträger verlaufen, d.h. das Sperrelement ist abgewinkelt zu der Haupterstreckungsebene des Gasgeneratorträgers orientiert und zwar so, dass es sich vom Gasgeneratorträger auf das in Rastposition befindliche Rastelement des Gehäuseteils zu und nicht von diesem weg erstreckt (vgl. Fig. 1B).

Beispielsweise weist das Sperrelement in einer solchen nicht erfindungsgemäßen Ausführung selbst keine zwei Teilabschnitt des Sperrelements miteinander verbindende Krümmung auf, sondern ist lediglich über eine Krümmung mit dem Gasgeneratorträger verbunden. Genauer ist das Sperrelement so von dem Gasgeneratorträger abgekrümmt, dass bei dem Versuch, das Rastelement aus der Rastöffnung herauszuziehen, das Rastelement so gegen einen Abschnitt des Sperrelementes drückt, dass das Sperrelement ein Drehmoment um einen Punkt im Bereich der Krümmung erfährt. Dadurch wird es auf das Rastelement zu gedreht (gebogen), bis es an einem weiteren Abschnitt des Rastelementes anliegt, so dass die Drehbewegung des Sperrelementes blockiert wird. Damit wird das Herausziehen des Rastelementes aus der Rastöffnung verhindert bzw. einem Herausziehen des Rastelementes zumindest entgegengewirkt.

Gemäß einer gleichfalls nicht erfindungsgemäßen Weiterbildung kann das Sperrelement von einer dem Gehäuseteil zuzuwendenden Seite des Gasgeneratorträgers weg und ausschließlich in eine von dem Gehäuseteil wegweisende Richtung abgekrümmt sein. Insbesondere befindet sich in dieser Variante das Sperrelement überwiegend oder vollständig auf der dem Gehäuseteil abzuwendenden Seite des Gasgeneratorträgers, die sich im montierten Zustand der Gassackanordnung abgewandt zu dem Gassack erstreckt. Beispielsweise weist das Sperrelement eine zumindest näherungsweise parallel zum Gasgeneratorträger verlaufende Stirnseite auf, wobei das Rastelement in seiner Rastposition an der Stirnseite anliegt oder zumindest bei Ausüben einer Zugkraft auf das Sperrelement entgegen der Einführrichtung zur Anlage an der Stirnseite des Sperrelementes kommt.

Dadurch wird das Sperrelement, wie oben beschrieben, in einer Richtung senkrecht oder schräg zur Einführrichtung auf das Rastelement zu bewegt, bis es gegen einen von dem an der Stirnseite anliegenden Abschnitt des Rastelementes verschiedenen Abschnitt des Rastelementes drückt oder, wenn es bereits vor Ausüben der Zugkraft an diesem Abschnitt anliegt, verstärkt gegen diesen Abschnitt des Rastelementes drückt. Die über das Rastelement in das Sperrelement eingeleitete Kraft wird somit zumindest teilweise durch einen Abschnitt des Rastelementes gehalten. Hierbei kann beispielsweise ein Randabschnitt der Rastöffnung an dem Rastelement anliegen und gewissermaßen als Gegenlager für das Rastelement dienen. Beispielsweise ist dieser "Gegenlager"-Randabschnitt der Rastöffnung gegenüber einem Randabschnitt der Rastöffnung, der durch das Sperrelement gebildet wird und der bei Zug an dem Rastelement gegen das Rastelement drückt, angeordnet.

Das Sperrelement weist lediglich genau eine Krümmung auf, die beide Teilabschnitte des Sperrelements miteinander verbindet. Hierbei bildet die Krümmung des Us z. B. die Krümmung, über die der erste mit dem zweiten Teilabschnitt (Arme des "Us") des Sperrelementes verbunden ist.

Der zweite Teilabschnitt weist z.B. eine zumindest näherungsweise parallel zum Gasgeneratorträger (d.h. dessen Haupterstreckungsebene) verlaufende Stirnseite auf, an der das Rastelement in seiner Rastposition oder zumindest bei Ausüben einer Zugkraft auf das Rastelement anliegt.

Beispielsweise ist die Stirnseite des zweiten Abschnitts des Sperrelementes so positioniert, dass sie mit einer Seite des Gasgeneratorträgers, die dem Gehäuseteil abzuwenden ist, abschließt, d.h. zumindest näherungsweise in einer Ebene mit dieser Seite des Gasgeneratorträgers liegt. Es ist natürlich auch denkbar, dass der zweite Abschnitt des Sperrelementes so ausgebildet ist, dass die Stirnseite, an der das Rastelement in Rastposition oder bei Zug anliegt, nicht in der Ebene der dem Gehäuseteil zuzuwendenden Seite des Gasgeneratorträgers liegt, sondern zum Beispiel weiter entfernt oder weniger weit entfernt von dem Gehäuseteil.

Darüber hinaus kann die Verbindung des ersten Teilabschnitt des Sperrelementes mit dem Gasgeneratorträger eine Verstärkung (zum Beispiel in Form einer Verdickung des Gasgeneratorträgers oder eines Verstärkungsmaterial) aufweisen, um zu verhindern, dass sich das Sperrelement bei Ausüben einer Zugkraft auf das Rastelement entgegen der Einführrichtung, d.h. bei Ausüben eines Druckes auf den zweiten Abschnitt des Rastelementes entgegen der Einführrichtung, überwiegend im Bereich der Verbindung mit dem Gasgeneratorträger von diesem abbiegt. Insbesondere ist die Verbindung zwischen dem ersten Teilabschnitt des Sperrelementes und dem Gasgeneratorträger so stabil, dass sich der zweite Teilabschnitt bei Ausüben eines Druck auf den zweiten Teil abschnitt (durch das Rastelement) entgegen der Einführrichtung vorwiegend oder ausschließlich im Bereich der Krümmung von dem ersten Teilabschnitt abbiegt.

Gemäß einer anderen Ausgestaltung der Erfindung ist das Sperrelement einstückig mit dem Gasgenerator ausgebildet. Insbesondere handelt es sich bei dem Gasgeneratorträger um ein Kunststoffteil, an dem das Sperrelement angeformt ist. Beispielsweise werden Gasgeneratorträger und Sperrelement per Spritzgussverfahren erzeugt.

In einer anderen Weiterbildung der Erfindung weist das Rastelement einen Rastabschnitt in Form eines Vorsprungs auf, der sich in Rastposition des Rastelementes auf einer dem Gehäuseteil abgewandten Seite des Gasgeneratorträgers befindet und z.B. an dem Sperrelement anliegt. Beispielsweise durchgreift das Rastelement in Rastposition mit einem ersten Abschnitt die Rastöffnung in dem Gasgeneratorträger, wobei der erste Abschnitt im Wesentlichen senkrecht zum Gasgeneratorträger verläuft. An einem Ende dieses die Rastöffnung durchgreifenden ersten Abschnitts ist ein zweiter Abschnitt angeordnet, der den Vorsprung ausbildet, wobei der Vorsprung von dem ersten Abschnitt des Rastelemente entlang des Gasgeneratorträgers absteht (bezogen auf den verrasteten Zustand).

Der Vorsprung bildet mit einer Oberseite, d.h. einer Seite, die entgegen der Einführrichtung weist, eine Anlagefläche aus, die (bezogen auf die Rastposition des Rastelementes) zumindest näherungsweise parallel zur Haupterstreckungsebene des Gasgeneratorträgers verläuft. Infolgedessen wird die Anlagefläche des Vorsprungs bei dem Versuch, das Rastelement aus der Rastöffnung herauszuziehen, gegen das Sperrelement, insbesondere gegen dessen z. B. ebenfalls zumindest näherungsweise parallel zur Haupterstreckungsebene des Gasgeneratorträgers verlaufenden Stirnseite, gedrückt.

Beispielsweise verläuft die Stirnseite (Anlagefläche) des Sperrelementes, an der das Rastelement in Rastposition anliegt oder gegen die es bei Ausübung einer Zugkraft auf das Rastelement gedrückt wird, schräg zur Haupterstreckungsrichtung des Sperrelementes bzw. parallel zur Haupterstreckungsebene des Gasgeneratorträgers. Mit anderen Worten kann sich das Sperrelement (bzw. der Abschnitt des Sperrelementes, der die Anlagefläche ausbildet) zwar schräg zum Gasgeneratorträger erstrecken, die Anlagefläche, die z. B. an einem Ende des Sperrelementes ausgebildet ist, verläuft jedoch parallel zum Gasgeneratorträger, und damit insbesondere parallel zu einer Anlagefläche des Rastelementes.

Die Rastöffnung weist in einem weiteren Beispiel der Erfindung einen zumindest näherungsweise rechteckigen Querschnitt auf, wobei der Querschnitt gemeint ist, der in der Haupterstreckungsebene des Gasgeneratorträgers liegt. Es ist natürlich auch denkbar, dass Rastöffnungen mit einer anderen Geometrie vorgesehen sind. Darüber hinaus ist es natürlich auch möglich, dass mehrere Rastöffnungen mit verschiedenen Geometrien und mehrere entsprechend ausgebildete Rastelemente verwendet werden.

Die Erfindung wird im Folgenden anhand von Ausführungsbeispielen unter Bezugnahme auf die Figuren näher erläutert. Es zeigen:
- Fig. 1A: eine perspektivische Darstellung einer nicht erfindungsgemäßen Ausführungsform einer Gassackanordnung;
- Fig. 1B: eine Schnittansicht eines Details der Gassackanordnung aus Fig. 1A;
- Fig. 2A: eine Schnittansicht eines Teils einer Gassackanordnung gemäß einem Ausführungsbeispiel der Erfindung vor dem Zusammenfügen von Gehäuseteil und Gasgeneratorträger;
- Fig. 2B: die Gasgeneratoranordnung aus Fig. 2A in perspektivischer Ansicht;
- Fig. 3A: eine Schnittansicht der Gasgeneratoranordnung aus Fig. 2A in verrastetem Zustand;
- Fig. 3B: einen Ausschnitt der Fig. 3A;
- Fig. 4A: eine Draufsicht eines Gasgeneratorträgers einer erfindungsgemäßen Gassackanordnung; und
- Fig. 4B: den Gasgeneratorträger aus Fig. 4A in perspektivischer Ansicht.

Gemäß Fig. 1A weist eine Gassackanordnung 1 ein Gehäuseteil in Form einer Gassackkappe 2 auf, die zum Abdecken eines (nicht dargestellten) Gassacks dient. Die Gassackanordnung weist des Weiteren einen Gasgeneratorträger 3 auf, der zur Aufnahme eines Gasgenerators (nicht dargestellt) ausgebildet ist. Die Gassackkappe 2 wird nach Anordnen des Gasgenerators und des Gassacks mit dem Gasgeneratorträger 3 verbunden.

Zum Verbinden der Gassackkappe 2 mit dem Gasgeneratorträger 3 weist die Gassackkappe 2 eine Mehrzahl von Rastelementen 21 auf, die in korrespondierende Rastöffnungen 31 des Gasgeneratorträgers 3 eingeführt werden. Die Rastelemente 21 wiederum umfassen einen als Vorsprung ausgebildeten Rastabschnitt 211, der von einem im Wesentlichen entlang der Einführrichtung (d.h. senkrecht zum Gasgeneratorträger 3) verlaufenden vertikalen Abschnitt 25 des Rastelementes 21 absteht, der in Rastposition die Rastöffnung 31 durchgreift. Nach vollständigem Einführen der Rastelemente 21 in die jeweilige Rastöffnung 31 hintergreift der jeweilige Vorsprung 211 ein Sperrelement 4, das einstückig mit dem Gasgeneratorträger 3 ausgebildet ist und das einen Abschnitt des Randes der Rastöffnung 31 bildet.

Die Rastelemente 21 sind ebenfalls einstückig mit der Gassackkappe 2 ausgeformt, wobei die Rastelemente insbesondere an einem inneren umlaufenden Steg der Gassackkappe angeformt sind. Der innere Steg verläuft beabstandet zu einem äußeren Umfang der Gassackkappe und kann gleichzeitig zur mechanischen Stabilisierung der Gassackkappe dienen.

Das Sperrelement 4 ist über eine Krümmung 41 mit dem Gasgeneratorträger 3 einstückig verbunden, wobei es aufgrund der Krümmung 41 so von dem Gasgeneratorträger 3 abgekrümmt ist, dass es zunehmend schräg zur Haupterstreckungsebene des Gasgeneratorträgers 3 verläuft und in der in Fig. 1B dargestellten Rastposition des Rastelementes 21 mit einer Stirnseite 411 an einer Auflagefläche 2111 des Vorsprungs 211 des Rastelementes 21 anliegt, wenn versucht wird, das Rastelement 21 entgegen der Einführöffnung aus der Rastöffnung 31 herauszuziehen.

Das Sperrelement 4 ist zudem über die Krümmung 41 so elastisch mit dem Gasgeneratorträger 3 verbunden, dass es sich beim Einführen des Rastelementes 21 in die Rastöffnung 31 vom gegenüberliegenden Rand der Rastöffnung 31 weg biegt und somit den Durchmesser der Rastöffnung 31 vergrößert, so dass der Vorsprung 211 des Rastelementes 21 durch die Rastöffnung 31 hindurchgeführt werden kann. Nach Hindurchführen des Vorsprungs 211 schnappt das Sperrelement 4 in Richtung auf das Rastelement 21 zurück (z. B. in seine Ausgangsposition), so dass es z.B. an dem vertikalen, d.h. parallel zur Einführrichtung verlaufenden Abschnitt 25 des Rastelementes 21 oder an einem anderen Abschnitt der Gassackkappe 2 anliegt. Insbesondere liegen sich die Stirnseite 411 und die Auflagefläche 2111 des Vorsprungs 211 des Rastelementes 21 in Rastposition des Rastelementes 21 zumindest näherungsweise parallel gegenüber. Dies ist jedoch nicht zwingend; die Stirnseite 411 kann durchaus auch unter einem Winkel gegenüber der Auflagefläche des Vorsprungs 211 orientiert sein.

Somit ermöglicht die Krümmung 41 einerseits das Wegbiegen des Sperrelementes beim Hindurchführen des Rastelementes 21 durch die Rastöffnung 31, andererseits ist das Sperrelement 4 über die Krümmung 41 auch so orientiert, dass es sich beim Ausüben einer Zugkraft entgegen der Einführrichtung auf das Rastelement 21 in einer Richtung senkrecht zur Einführrichtung auf das Rastelement 21 (insbesondere dessen vertikalen Abschnitt) oder einen Abschnitt der Gassackkappe 2 zu bewegt, bis es gegen das Rastelement 21 oder den Abschnitt der Gassackkappe 2 drückt, wodurch eine weitere (Schwenk)bewegung des Sperrelementes verhindert wird. Mit anderen Worten wird das Sperrelement 4 bei Ausüben einer Zugkraft auf das Rastelement 21 um einen Drehpunkt im Bereich der Krümmung 41 gegen die Einführrichtung abgebogen, bis es an dem vertikalen Abschnitt des Rastelementes zur Anlage kommt.

Insbesondere dadurch, dass das Rastelement 21 an einem dem Sperrelement 4 gegenüberliegenden Randabschnitt 32 der Rastöffnung 31 des Gasgeneratorträgers gestützt wird, wird ein Verbiegen des Sperrelementes 4 beim Herausziehen des Rastelementes 21 wirksam blockiert. Mit anderen Worten ist das Sperrelement 4 selbsthemmend, da der Versuch eines Herausziehens des Rastelementes 21 aus der Rastposition zu einem zunehmenden Blockieren des Sperrelementes führt.

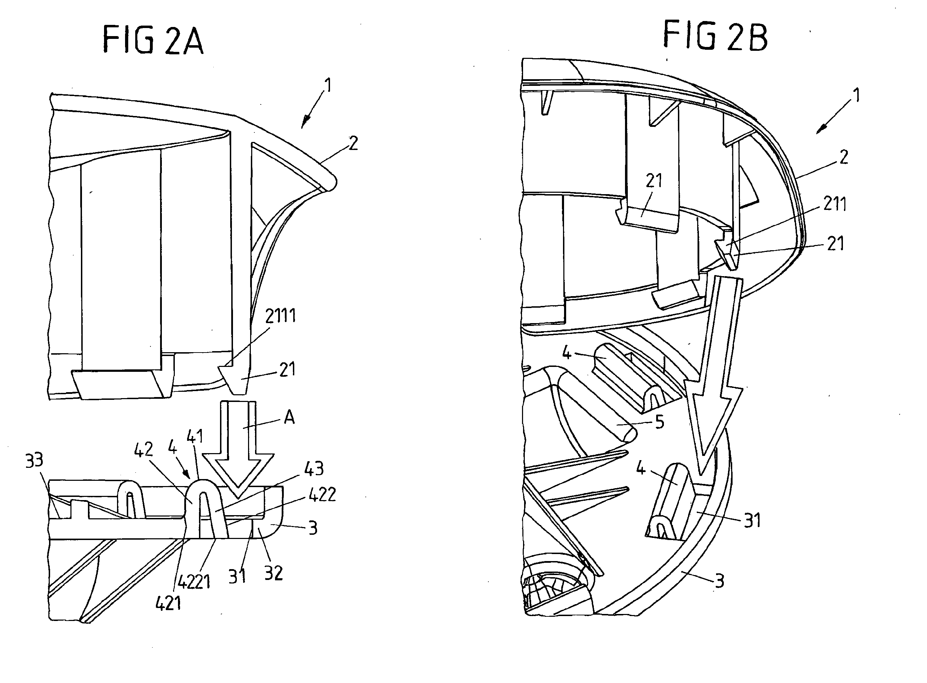

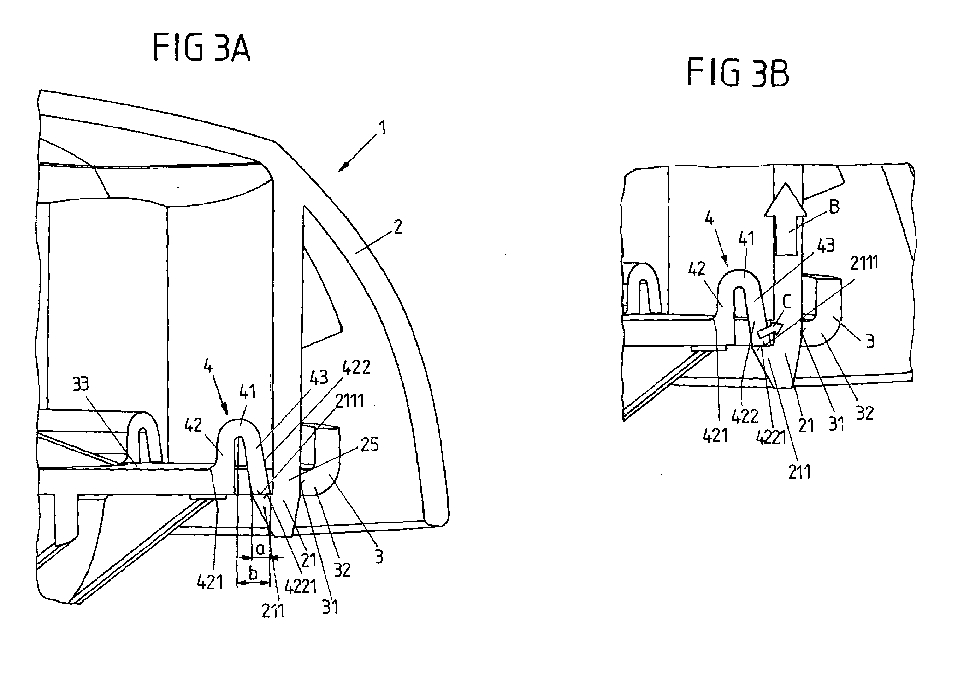

Die Figuren 2A, 2B sowie 3A, 3B beziehen sich auf eine weiterentwickelte Gassackanordnung gemäß einem Ausführungsbeispiel der Erfindung, wobei die Figuren 2A und 2B sich auf den unverrasteten Zustand beziehen, während die Figuren 3A und 3B die am Gassackträger 3 verrastete Gassackkappe 2 darstellen. Die Figuren 2A, 3A und 3B sind jeweils Schnitte durch die Gassackanordnung, während die Figur 2B eine perspektivische Ansicht der Gassackanordnung zeigt.

Die Abdeckkappe des erfindungsgemäßen Ausführungsbeispiels entspricht der Abdeckkappe der Figuren 1A und 1B. Im Unterschied zu den Figuren 1A und 1B ist jedoch das Sperrelement 4 anders gestaltet: Das Sperrelement 4 weist hier einen ersten Teilabschnitt 42 und einen zweiten Teilabschnitt 43 auf, wobei der erste Abschnitt 42 (z.B. über eine Krümmung 421) mit dem Gasgeneratorträger 3 und mit dem zweiten Teilabschnitt 43 über eine Krümmung 41 einstückig verbunden ist. Insbesondere ist das Sperrelement 4 auch in diesem Ausführungsbeispiel an den Gasgeneratorträger 3 per Spritzgussverfahren angeformt.

Mit anderen Worten ist das Sperrelement 4 im Querschnitt zumindest näherungsweise U-förmig ausgestaltet, wobei der erste und der zweite Teilabschnitt 42, 43 die beiden Arme des Us und die Krümmung 41 die Verbindung zwischen den beiden Armen darstellt. Das Sperrelement 4 ist so orientiert, dass sich die Krümmung 41 auf einer Seite (Oberseite) 33 des Gasgeneratorträgers 3 befindet, die der Gassackkappe 2 zuzuwenden ist, d. h. auf einer Seite, die im verrasteten Zustand von Gassackkappe 2 und Gasgeneratorträger 3 der Gassackkappe 2 zugewandt ist. Das Sperrelement 4 ist laschenartig ausgebildet, d.h. es besitzt eine senkrecht zur U-förmigen Grundfläche orientierte Längsausdehnung (parallel zum Gasgeneratorträger).

Folglich steht in dem in den Figuren 2A, 2B sowie 3A, 3B gezeigten Ausführungsbeispiel das Sperrelement 4 als gewölbter Abschnitt von einer der Gassackkappe 2 (dem Gehäuseteil) zugewandten, im Wesentlichen ebenen Seite des Gasgeneratorträgers 3 in Richtung auf die Gassackkappe 2 vor.

Die Rastelemente 21 der Gassackkappe 2 sind, wie bereits erwähnt, analog zu den Rastelementen 21 der Figuren 1A und 1B ausgestaltet, d. h. sie weisen einen in Rastposition die Rastöffnung 31 des Gasgeneratorträgers 3 durchgreifenden vertikalen Abschnitt 25 auf, von dem sich ein Vorsprung 211 mit einer Anlagefläche 2111 erstreckt, der das Sperrelement 4 hintergreift. Dadurch, dass der zweite Teilabschnitt 43 über die Krümmung 41 mit dem ersten Teilabschnitt 42 verbunden ist, weist der zweite Teilabschnitt 43 eine gewisse Flexibilität auf, so dass beim Einführen des Rastelementes 21 entlang der Einführrichtung A in die Rastöffnung 31 der Vorsprung 211 gegen eine dem ersten Teilabschnitt 42 abgewandte Oberfläche des zweiten Teilabschnittes 43 drückt. Dadurch wird der zweite Teilabschnitt 43 auf den ersten Teilabschnitt 42 zu bewegt, so dass die Abmessungen (die Breite der im Wesentlichen rechteckigen) Rastöffnung 31 vergrößert werden und das Rastelement 21 mit dem Vorsprung 211 durch die Rastöffnung 31 hindurchgeführt werden kann. Beispielsweise beträgt der Abstand b zwischen Krümmung 41 und der vorderen Kante des zweiten Abschnitts 43, die einen Randabschnitt der Rastöffnung 31 begrenzt, mindestens das 1,5 fache der Breite a des zweiten Abschnitts 43 (gemessen quer zu seiner Längsausdehnung, d.h. senkrecht zur Einführrichtung A).

Hat das Rastelement 21 seine Rastposition erreicht, schnappt der zweite Teilabschnitt 43 zurück, so dass sich eine Stirnseite 4221 des zweiten Teilabschnitts 43 - entgegen der Einführrichtung A betrachtet - oberhalb der Anlagefläche 2111 des Vorsprungs 211 des Rastelementes 21 befindet. Die Stirnseite 4221 des zweiten Teilabschnitts 43 bildet eine Anlagefläche aus, an der die Anlagefläche 2111 des Vorsprungs 211 des Rastelementes anliegt oder zur Anlage kommt, wenn eine Zugkraft auf das Rastelement ausgeübt wird. Zudem ist der zweite Teilabschnitt 43 so ausgerichtet, dass er, wenn sich das Rastelement 21 in seiner Rastposition befindet, etwas schräg gegenüber der Einführrichtung A verläuft, und zwar so, dass sein über die Krümmung 41 mit dem ersten Teilabschnitt 42 verbundenes Ende einen größeren Abstand zu dem verrasteten Rastelement 21 aufweist als sein der Krümmung 41 abgewandtes Ende (das die Stirnseite 4221 ausbildet). Dadurch erfährt der zweite Teilabschnitt 43 eine Auslenkung (insbesondere um einen im Bereich der Krümmung 41 positionierten Drehpunkt) auf den vertikalen Abschnitt des Rastelementes 21 oder auf einen Abschnitt der Gassackkappe 2 zu (vgl. Fig. 3B), wenn eine Zugkraft in einer zur Einführrichtung A entgegengesetzten Richtung B auf das Rastelement 21 ausgeübt wird. Die Auslenkung des zweiten Teilabschnitts 43 ist in Fig. 3B durch den Pfeil "C" angedeutet.

Der vertikale Abschnitt des Rastelementes 21 blockiert somit ein weiteres Abbiegen des zweiten Teilabschnitts 43, was dadurch unterstützt wird, dass der vertikale Abschnitt des Rastelementes durch einen dem zweiten Teilabschnitt 43 des Sperrelementes 4 gegenüber liegenden Randabschnitt 32 der Rastöffnung 31 gestützt wird. Es ist auch möglich, dass der zweite Teilabschnitt 43 des Sperrelementes 4 in der Rastposition des Rastelementes 21 bereits gegen den die Rastöffnung 31 durchgreifenden vertikalen Abschnitt des Rastelementes 21 drückt, so dass bei dem Versuch, das Rastelement 21 aus der Rastöffnung 31 herauszuziehen, keine weitere Schwenkbewegung des zweiten Teilabschnitts 422 in Richtung auf das Rastelement 21 mehr möglich ist. Das Sperrelement, d. h. der zweite Teilabschnitt 43, erfährt jedoch dennoch eine Kraftkomponente in Richtung auf den vertikalen Abschnitt des Rastelements 21, so dass es verstärkt gegen die Rastöffnung 31 durchgreifenden Abschnitt des Rastelementes 21 drücken wird.

Die zumindest näherungsweise rechteckige Stirnseite 4221 des zweiten Abschnitts 43 des Sperrelementes 4 verläuft in Ausgangsposition, d.h. vor dem Verrasten der Gassackkappe an dem Gasgeneratorträger, im Wesentlichen parallel zu dem Gasgeneratorträger, obwohl des zweite Abschnitt selber, wie erwähnt, schräg zum Gasgeneratorträger orientiert ist. In einem Beispiel liegt die Stirnseite 4221 sogar zumindest näherungsweise in einer Ebene mit einem an das Sperrelement 4 angrenzenden Abschnitt einer Unterseite des Gasgeneratorträgers 3, die der Oberseite 33 abgewandt ist. In einem solchen Beispiel kann somit das Ende des zweiten, schräg verlaufenden Teilabschnitts 43 mit der der Gassackkappe 2 abgewandten (Unter-)Seite des Gasgeneratorträgers 3 fluchten bzw. liegt in der Haupterstreckungsebene des Gasgeneratorträgers 3 auf der der Gassackkappe 2 abgewandten (Unter-)Seite des Gasgeneratorträgers 3.

Beispielsweise weist die Stirnseite 4221 eine Fläche (Auflagefläche) von ca. 280 mm² auf, gegen die die Auflagefläche des Vorsprungs 211 des Rastelementes 21 drückt. Die Auflagefläche ist von großer Bedeutung für die Stabilität der Rastverbindung. Durch Anordnen einer Mehrzahl von Rastelementen kann die Stabilität entsprechend gesteigert werden.

Der Gassackträger 3 des Ausführungsbeispiels der Figuren 2A, 2B sowie 3A, 3B weist eine Mehrzahl von Rastöffnungen 31 auf, die entlang eines äußeren Umfanges, der näherungsweise Kreisform besitzt, angeordnet sind, wobei der Abstand zwischen benachbarten Rastöffnungen 31 zumindest teilweise konstant ist.

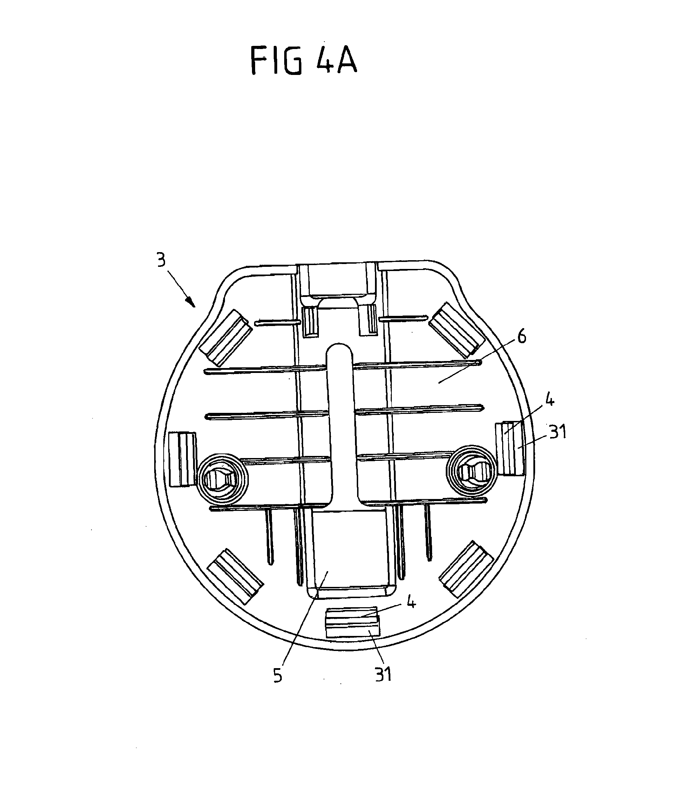

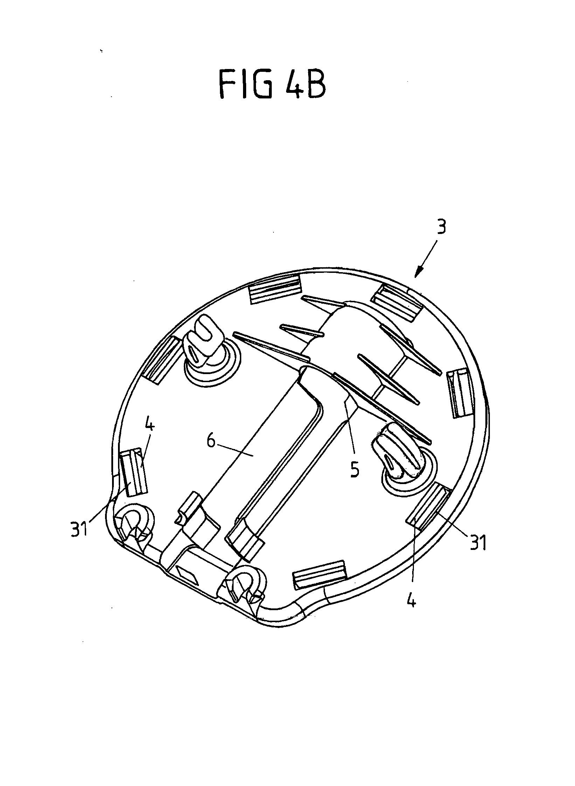

Des Weiteren weist der Gasgeneratorträger 3 eine Einbuchtung 5 auf, an die sich eine Überwölbung 6 anschließt. Die Ausbuchtung 5 und die Überwölbung 6 dienen als Aufnahme für einen rohrförmigen Gasgenerator (nicht dargestellt) an dem Gasgeneratorträger 3. Die durch die Ausbuchtung 5 und die Überwölbung 6 gebildete Aufnahme für den Rohrgasgenerator ist insbesondere auch in den Figuren 4A und 4B gezeigt, die ausschließlich den Gasgeneratorträger 3 des Ausführungsbeispiels der Figuren 2A, 2B sowie 3A, 3B darstellen.

Es wird darauf hingewiesen, dass Elemente der erläuterten Ausführungsbeispiele natürlich auch in Kombination miteinander verwendet werden können. Beispielsweise können an einem Gasgeneratorträger sowohl Sperrelemente gemäß dem Ausführungsbeispiel der Figuren 1A und 1B als auch Sperrelemente gemäß dem Ausführungsbeispiel der Figuren 2A, 2B sowie 3A, 3B angeordnet sein.

### Bezugszeichenliste

- 1: Gassackanordnung
- 2: Gassackkappe
- 3: Gasgeneratorträger
- 4: Sperrelement
- 5: Einbuchtung
- 6: Überwölbung
- 21: Rastelement
- 25: vertikaler Abschnitt
- 31: Rastöffnung
- 32: Randabschnitt
- 33: Seite Gasgeneratorträger
- 41: Krümmung
- 42: erster Teilabschnitt
- 43: zweiter Teilabschnitt
- 211: Vorsprung
- 411: Stirnseite
- 421: Krümmung
- 422: Oberfläche
- 2111: Auflagefläche
- 4221: Stirnseite zweiter Teilabschnitt
- A: Einführrichtung
- B: Zugrichtung

## Patentansprüche

1. Gassackanordnung für ein Fahrzeuginsassen-Rückhaltesystem, mit
- einem zum Schutz eines Fahrzeuginsassen aufblasbaren Gassack;
- einem Gasgenerator zum Aufblasen des Gassacks;
- einem Gasgeneratorträger (3), an dem der Gasgenerator angeordnet ist;
- einem Gehäuseteil (2), das den Gassack bei im Fahrzeug montierter Gassackanordnung (1) zum Fahrzeuginnenraum hin abdeckt,
wobei
- das Gehäuseteil (2) mindestens ein Rastelement (21) und der Gasgeneratorträger (3) mindestens eine dem Rastelement (21) zugeordnete Rastöffnung (31) aufweisen,
- das Gehäuseteil (2) dadurch mit dem Gasgeneratorträger (3) verbunden werden kann, dass das Rastelement (21) entlang einer im Wesentlichen senkrecht zu dem Gasgeneratorträger (3) orientierten Einführrichtung (A) in die Rastöffnung (31) bis zum Erreichen einer Rastposition eingeführt wird, in der es ein an die Rastöffnung (31) angrenzendes und mit dem Gasgeneratorträger (3) verbundenes Sperrelement (4) hintergreift, so dass einem Herausziehen des Rastelementes (21) aus der Rastöffnung (31) entgegengewirkt wird,
- das Sperrelement (4) so ausgebildet ist, dass es zumindest abschnittsweise in einer Richtung, die schräg oder quer zur Einführrichtung (A) verläuft, gegen das Rastelement (21) drückt, wenn auf das in Rastposition befindliche Rastelement (21) eine Zugkraft entgegen der Einführrichtung (A) ausgeübt wird, und
- das Sperrelement (4) einen ersten und einen zweiten Teilabschnitt (42, 43) aufweist, wobei der erste Teilabschnitt (42) mit dem Gasgeneratorträger (3) und über eine Krümmung (41) mit dem zweiten Teilabschnitt (43) verbunden ist, so dass das Sperrelement (4) im Querschnitt näherungsweise U- oder V-förmig ausgebildet ist,
**dadurch gekennzeichnet, dass**
sich die Krümmung (41) auf der dem Gehäuseteil (2) zuzuwendenden Seite (33) des Gasgeneratorträgers (3) befindet.

2. Gassackanordnung nach Anspruch 1, **dadurch gekennzeichnet, dass** das Sperrelement (4) zumindest abschnittsweise unter einem Winkel zu dem Gasgeneratorträger (3) verläuft.

3. Gassackanordnung nach Anspruch 1 oder 2, **dadurch gekennzeichnet, dass** das Sperrelement (4) im Querschnitt zumindest näherungsweise U-förmig ausgestaltet ist, wobei der erste und der zweite Teilabschnitt (42, 43) die beiden Arme des Us und die Krümmung (41) die Verbindung zwischen den beiden Armen darstellt.

4. Gassackanordnung nach einem der vorhergehenden Ansprüche, **dadurch gekennzeichnet, dass** über das Sperrelement (4) und das Rastelement (21) eine selbsthemmende Verrastung des Gehäuseteils (2) an dem Gasgeneratorträger (3) realisiert ist.

5. Gassackanordnung nach einem der vorhergehenden Ansprüche, **dadurch gekennzeichnet, dass** der zweite Teilabschnitt (43) so ausgerichtet ist, dass er, wenn sich das Rastelement (21) in seiner Rastposition befindet, etwas schräg gegenüber der Einführrichtung (A) verläuft, und zwar so, dass sein über die Krümmung (41) mit dem ersten Teilabschnitt (42) verbundenes Ende einen größeren Abstand zu dem verrasteten Rastelement (21) aufweist als sein der Krümmung (41) abgewandtes Ende.

6. Gassackanordnung nach einem der vorhergehenden Ansprüche, **dadurch gekennzeichnet, dass** eine Stirnseite (4221) des zweiten Teilabschnitts (43) so positioniert ist, dass sie mit einer Seite des Gasgeneratorträgers (3), die dem Gehäuseteil (2) abzuwenden ist, abschließt und/oder zumindest näherungsweise in einer Ebene mit dieser Seite des Gasgeneratorträgers (3) liegt.

7. Gassackanordnung nach einem der vorhergehenden Ansprüche, **dadurch gekennzeichnet, dass** sich das Sperrelement (4) zumindest mit einem Teilabschnitt (42, 43) schräg zum Gasgeneratorträger (3) erstreckt, und dass die Anlagefläche des Sperrelements (4), an der das Rastelement (3) in Rastposition anliegt oder gegen die es bei Ausübung einer Zugkraft auf das Rastelement (3) gedrückt wird, parallel zum Gasgeneratorträger (3) verläuft

8. Gassackanordnung nach einem der vorhergehenden Ansprüche, **dadurch gekennzeichnet, dass** das Rastelement (21) in Rastposition an einer zumindest näherungsweise parallel zum Gasgeneratorträger (3) verlaufenden Stirnseite (4221) des zweiten Teilabschnitts (43) anliegt.

9. Gassackanordnung nach einem der vorhergehenden Ansprüche, **dadurch gekennzeichnet, dass** das Sperrelement (4) einstückig mit dem Gasgeneratorträger (3) verbunden ist.

10. Gassackanordnung nach Anspruch 9, **dadurch gekennzeichnet, dass** der Gasgeneratorträger (3) ein Kunststoffteil ist, an dem das Sperrelement (4) angeformt ist.

11. Gassackanordnung nach einem der vorhergehenden Ansprüche, **dadurch gekennzeichnet, dass** das Rastelement (21) einen Vorsprung (211) aufweist, der in Rastposition an dem Sperrelement (4) anliegt.

12. Gassackanordnung nach einem der vorhergehenden Ansprüche, **dadurch gekennzeichnet, dass** die Rastöffnung (31) einen zumindest näherungsweise rechteckigen Querschnitt aufweist.

13. Gassackanordnung nach einem der vorhergehenden Ansprüche, **dadurch gekennzeichnet, dass** eine schräg zum Gasgeneratorträger (3) verlaufende Oberfläche (422) des Sperrelementes (4) die Rastöffnung (31) begrenzt.

14. Gassackanordnung nach einem der vorhergehenden Ansprüche, **dadurch gekennzeichnet, dass** das Sperrelement (4) eine Anlagefläche aufweist, an der das Rastelement (21) in Rastposition anliegt, wobei die Anlagefläche schräg zur Haupterstreckungsrichtung des Sperrelements (4) und/oder parallel zur Haupterstreckungsebene des Gasgeneratorträgers (3) verläuft.

## Claims

1. An airbag arrangement for a vehicle occupant restraint system, comprising
- an airbag inflatable for protecting a vehicle occupant;
- a gas generator for inflating the airbag;
- a gas generator carrier (3) at which the gas generator is arranged;
- a housing part (2) which - with regard to the state of the airbag arrangement (1) installed in the vehicle - covers the airbag towards the vehicle interior,
wherein
- the housing part (2) comprises at least one latching element (21) and the gas generator carrier (3) comprises at least one latching opening (31) assigned to the latching element (21),
- the housing part (2) can be connected to the gas generator carrier (3) by inserting the latching element (21) into the latching opening (31) along an insertion direction (A) oriented substantially vertical to the gas generator carrier (3), until reaching a latching position, where the latching element (21) reaches behind a blocking element (4) adjacent the latching opening (31) and connected to the gas generator carrier (3) such that pulling the latching element out of the latching opening is counteracted,
- the blocking element (4) is configured in such a way that it at least in sections presses against the latching element (21) in a direction running obliquely or transversely to the insertion direction (A) when a tensile force opposite the insertion direction (A) is exerted on the latching element (21) in latching position, and
- the blocking element (4) comprises a first and a second subsection (42, 43), wherein the first subsection (42) is connected to the gas generator carrier (3) and via a curvature (41) to the second subsection (43) such that the blocking element (4) is designed at least approximately U- or V-shaped in cross section,
**characterized in that**
the curvature (41) is located on a side (33) of the gas generator carrier (3) that is to be turned towards the housing part (2).

2. Airbag arrangement according to claim 1, **characterized in that** the blocking element (4) at least in sections extends at an angle to the gas generator carrier (3).

3. Airbag arrangement according to claim 1 or 2, **characterized in that** the blocking element (4) is designed at least approximately U-shaped in cross section, wherein the first and the second subsection (42, 43) of the two arms of the U and the curvature (41) represents the connection between the two arms.

4. Airbag arrangement according to one of the preceding claims, **characterized in that** the blocking element (4) and the latching element (21) realize a self-locking locking connection of the housing part (2) to the gas generator carrier (3).

5. Airbag arrangement according to one of the preceding claims, **characterized in that** the second subsection (43) is orientated in such a way that, when the latching element (21) is in its latching position, it extends slightly inclined relative to the insertion direction (A) such that its ending connected to the first subsection (42) via the curvature (41) has a greater distance to the locked latching element (21) than its ending which faces away from the curvature (41).

6. Airbag arrangement according to one of the preceding claims, **characterized in that** the front side (4221) of the second subsection (43) is positioned in such a way that it is aligned with a side of the gas generator carrier (3) which is to be turned towards the housing part (2) and/or at least approximately is arranged in a plane with this side of the gas generator carrier (3).

7. Airbag arrangement according to one of the preceding claims, **characterized in that** the blocking element (4) at least with a subsection (42, 43) extends obliquely to the gas generator carrier (3) and that the bearing surface of the blocking element (4), against which the latching element (3) bears in latching position or against which it is pressed when a tensile force is exerted on the latching element (3), extends parallel to the gas generator carrier (3).

8. Airbag arrangement according to one of the preceding claims, **characterized in that** the latching element (21) in latching position bears against a front side (4221) of the second subsection (43) which extends at least approximately parallel to the gas generator carrier (3).

9. Airbag arrangement according to one of the preceding claims, **characterized in that** the blocking element (4) is integrally connected to the gas generator carrier (3).

10. Airbag arrangement according to claim 9, **characterized in that** the gas generator carrier (3) is a plastic part at which the blocking element (4) is moulded.

11. Airbag arrangement according to one of the preceding claims, **characterized in that** the latching element (21) comprises a protrusion (211) which in latching position bears against the blocking element (4).

12. Airbag arrangement according to one of the preceding claims, **characterized in that** the latching opening (31) comprises an at least essentially rectangular cross section.

13. Airbag arrangement according to one of the preceding claims, **characterized in that** a surface (422) of the blocking element (4) extending inclined to the gas generator carrier (3) limits the latching opening (31).

14. Airbag arrangement according to one of the preceding claims, **characterized in that** the blocking element (4) comprises a bearing surface, against which the latching element (21) bears in latching position, wherein the bearing surface extends inclined to the main extension direction of the blocking element (4) and/or parallel to the main extension plane of the gas generator carrier (3).

## Revendications

1. Ensemble de sac à gaz pour un système de retenue d'occupant de véhicule avec
- un sac à gaz gonflable pour la protection d'un occupant de véhicule ;
- un générateur de gaz pour le gonflage du sac à gaz ;
- un support de générateur de gaz (3), sur lequel le générateur de gaz est disposé ;
- une partie de boîtier (2) qui recouvre le sac à gaz vers l'espace intérieur du véhicule lorsque l'ensemble de sac à gaz (1) est monté dans le véhicule,
- la partie de boîtier (2) présentant au moins un élément d'encliquetage (21) et le support de générateur de gaz (3) présentant au moins une ouverture d'encliquetage (31) associée à l'élément d'encliquetage (21),
- la partie de boîtier (2) pouvant être reliée au support de générateur de gaz (3) du fait que l'élément d'encliquetage (21) est introduit le long d'un sens d'introduction (A) orienté sensiblement perpendiculairement au support de générateur de gaz (3) dans l'ouverture d'encliquetage (31) jusqu'à atteindre une position d'encliquetage, dans laquelle il vient en prise derrière un élément de verrouillage (4) contigu à l'ouverture d'encliquetage (31) et relié au support de générateur de gaz (3) de sorte à agir contre un retrait de l'élément d'encliquetage (21) hors de l'ouverture d'encliquetage (31),
- l'élément de verrouillage (4) étant réalisé de sorte à presser au moins par section, dans un sens qui s'étend de façon oblique ou transversalement au sens d'introduction (A), contre l'élément d'encliquetage (21) lorsqu'une force de traction est exercée dans le sens inverse au sens d'introduction (A) sur l'élément d'encliquetage (21) et
- l'élément de verrouillage (4) présentant une première et une seconde section partielle (42, 43), la première section partielle (42) étant reliée au support de générateur de gaz (3) et par une courbure (41) à la seconde section partielle (43) de sorte que l'élément de verrouillage (4) soit réalisé en section transversale approximativement en U ou V,
**caractérisé en ce que**
la courbure (41) se trouve sur le côté (33) à tourner vers la partie de boîtier (2) du support de générateur de gaz (3).

2. Ensemble de sac à gaz selon la revendication 1, **caractérisé en ce que** l'élément de verrouillage (4) s'étend au moins par section selon un angle par rapport au support de générateur de gaz (3).

3. Ensemble de sac à gaz selon la revendication 1 ou 2, **caractérisé en ce que** l'élément de verrouillage (4) est configuré en section transversale au moins approximativement en U, la première et la seconde section partielle (42, 43) constituant les deux bras du U et la courbure (41) constituant la liaison entre les deux bras.

4. Ensemble de sac à gaz selon l'une quelconque des revendications précédentes, **caractérisé en ce qu'**un encliquetage autobloquant de la partie de boîtier (2) sur le support de générateur de gaz (3) est réalisé par le biais de l'élément de verrouillage (4) et l'élément d'encliquetage (21).

5. Ensemble de sac à gaz selon l'une quelconque des revendications précédentes, **caractérisé en ce que** la seconde section partielle (43) est orientée de sorte à s'étendre, lorsque l'élément d'encliquetage (21) se trouve dans sa position d'encliquetage, un peu en biais par rapport au sens d'introduction (A) et ce de sorte que son extrémité reliée par la courbure (41) à la première section partielle (42) présente une distance plus grande par rapport à l'élément d'encliquetage (21) encliqueté que son extrémité éloignée de la courbure (41).

6. Ensemble de sac à gaz selon l'une quelconque des revendications précédentes, **caractérisé en ce qu'**un côté frontal (4221) de la seconde section partielle (43) est positionné de sorte à se terminer par un côté du support de générateur de gaz (3) qui est à éloigner de la partie de boîtier (2) et/ou se trouve au moins approximativement dans un plan avec ce coté du support de générateur de gaz (3).

7. Ensemble de sac à gaz selon l'une quelconque des revendications précédentes, **caractérisé en ce que** l'élément de verrouillage (4) s'étend au moins avec une section partielle (42, 43) en biais par rapport au support de générateur de gaz (3) et **en ce que** la surface d'appui de l'élément de verrouillage (4), contre laquelle l'élément d'encliquetage (3) repose en position d'encliquetage ou contre laquelle il est pressé lors de l'exercice d'une force de traction sur l'élément d'encliquetage (3), s'étend parallèlement au support de générateur de gaz (3).

8. Ensemble de sac à gaz selon l'une quelconque des revendications précédentes, **caractérisé en ce que** l'élément d'encliquetage (21) repose en position d'encliquetage contre un côté avant (4221), s'étendant au moins approximativement parallèlement au support de générateur de gaz (3), de la seconde section partielle (43).

9. Ensemble de sac à gaz selon l'une quelconque des revendications précédentes **caractérisé en ce que** l'élément de verrouillage (4) est relié d'un seul tenant au support de générateur de gaz (3).

10. Ensemble de sac à gaz selon la revendication 9, **caractérisé en ce que** le support de générateur de gaz (3) est une partie plastique, sur laquelle l'élément de verrouillage (4) est formé.

11. Ensemble de sac à gaz selon l'une quelconque des revendications précédentes, **caractérisé en ce que** l'élément d'encliquetage (21) présente une saillie (211) qui repose en position d'encliquetage contre l'élément de verrouillage (4).

12. Ensemble de sac à gaz selon l'une quelconque des revendications précédentes, **caractérisé en ce que** l'ouverture d'encliquetage (31) présente une section transversale au moins approximativement rectangulaire.

13. Ensemble de sac à gaz selon l'une quelconque des revendications précédentes, **caractérisé en ce qu'**une surface (422), s'étendant en biais par rapport au support de générateur de gaz (3), de l'élément de verrouillage (4) délimite l'ouverture d'encliquetage (31).

14. Ensemble de sac à gaz selon l'une quelconque des revendications précédentes, **caractérisé en ce que** l'élément de verrouillage (4) présente une surface d'appui, contre laquelle l'élément d'encliquetage (21) repose en position d'encliquetage, la surface d'appui s'étendant en biais par rapport au sens d'étendue principale de l'élément de verrouillage (4) et/ou parallèlement au plan d'étendue principale du support de générateur de gaz (3).
